# EUROPEAN PATENT APPLICATION

(11) **EP 2 360 078 A1**
(43) Date of publication of application: **24.08.2011**
(21) Application number: 11154249.4
(22) Date of filing: 11.02.2011
(51) Int. Cl.: B61D 15/00, B60F 1/04

(54) **A carriage to support and move a road vehicle on rails**

(30) Priority: 15.02.2010 IT BO20100079
(71) Applicant: Dallara, Riccardo, 44123 Ferrara (IT)
(72) Inventor: Dallara, Riccardo, 44123 Ferrara (IT)
(74) Representative: Dall'Olio, Giancarlo

(57) **Abstract**

The carriage for support and movement of a road vehicle on rails comprises: a pair of main shafts (2, 3), orientated transversally of the rails, provided with rolling means (20, 30) destined to engage with the rails and rotatingly supporting, in proximity of ends thereof, a pair of frames (4) for bilateral support of an axle (Y) of the vehicle, preferably a drive axle; each frame (4) rotatingly supporting gripping organs (5) able to couple to a hub of a wheel of the vehicle at the drive axle (Y) thereof; and transmission organs (6) associated to at least a frame (4) of the pair of frames (4), able to transmit to at least a first main shaft (2) a drive motion of the gripping organs (5) associated to the hub of the wheel.

## Description

### DESCRIPTION OF THE INVENTION

The present invention relates to the technical sector of devices for supporting and moving road vehicles on rails, tracks and like guide systems.

Movement devices are generally constituted by a pair of carriages, one for each vehicle axis (lorries, automobiles etc.) which engage directly on the rails.

In a first known type, the carriages directly support the vehicle frame inferiorly, at predetermined rest points, variable according to the type of vehicle.

The advancement of the vehicle, notwithstanding the support of the carriages, is however guaranteed by the grip of the tyres directly on the rails.

The problems relating to this type of carriage are easily perceived.

Firstly, the carriages are customised to a predetermined type of vehicle, according to the rest points, and have therefore to be replaced and/or modified according to the required type.

Also, the drive provided directly by the vehicle tyres gripping on the rails leads to limitations in the possible degree of curvature of the rails beyond a determined limit amount. In these cases the grip of the tyres on the rails would be lost, leading to great instability during the movement stage.

Notwithstanding the partial support of the vehicle at the couplings of the tyres/rails and frame/carriage, a supplementary shock-absorbing system is required to reduce the effects of the impacts and irregularities of the rails during the movement stage.

Of no lesser relevance is the poor braking performance, with negative effects for safety standards, due to the coupling of metal surfaces at the carriage/rail contact section.

In a further known type, the carriages still inferiorly support the vehicle frame at the rest points, but in this case the tyres are not gripping on the rails.

In this case the drive is directly supplied by the carriage, generally by means of the use of a power take-off of the vehicle, when present.

In this way the vehicle is made stable during motion thereof, though with a considerable increase in costs.

This type of carriage, however, does not solve the problems connected to the adaptability of the carriages to the type of vehicle, the need for a shock-absorbing system and the poor performance in braking, which have a heavy impact on costs.

The aim of the present invention is to obviate the above-cited drawbacks by providing a support carriage for support and movement of a road vehicle on rails which guarantees maximum stability thereof during motion; further, it is adaptable to a vast range of vehicles.

A further aim of the invention is to provide a carriage for support and movement of a road vehicle on rails, which is able to produce maximum shock-absorbing standards and optimum braking performance, while having especially contained costs with respect to known solutions.

The above-indicated aims are obtained by means of a carriage for support and movement of a road vehicle on rails, comprising: a pair of main shafts, orientated transversally of the rails, provided with rolling means destined to engage with the rails and rotatingly supporting, in proximity of ends thereof, a pair of frames for bilateral support of an axle of the vehicle, preferably a drive axle; each frame rotatingly supporting gripping organs able to couple to a hub of a wheel of the vehicle at the drive axle thereof; and transmission organs associated to at least a frame of the pair of frames, able to transmit to at least a first main shaft a drive motion of the gripping organs associated to the hub of the wheel.

In particular embodiments, the carriage of the invention comprises one or more of the following characteristics, considered singly or in combination:
transmission organs are associated to both frames for a bilateral transmission of the motion to the first main shaft;
the pair of frames is positioned adjustably with respect to the main shafts, in order to enable maximum adaptability to the transversal profile of the vehicle;
the transmission organs comprise switch means which enable advancement of the carriage in the two motion directions, forwards and reverse, with a same rotation direction of the vehicle axle;
the transmission organs comprise at least a first shaft, borne rotatably by the frame, provided at ends with cogged wheels, preferably conical, destined to enmesh with corresponding cogged wheels keyed to an end of the first main shaft and the gripping organs;
the transmission organs further comprise a second shaft, borne rotatably by the frame, provided at ends with cogged wheels, preferably conical, destined to enmesh with corresponding cogged wheels keyed to an end of the second main shaft and to the gripping organs;
the switch means comprise a pair of cogged wheels borne by a collar keyed slidably to the gripping organs, according to the axle of the hub, each of which is able to engage, not together with the other, with the cogged wheels of the first and/or second shaft of the transmission organs in order to enable an opposite rotation of the respective first and/or second main shafts with the same rotation direction of the axle of the vehicle Y;
the first and/or second cogged wheels of the shaft face the sleeve and are interposed between the pair of cogged wheels of the switch means;
the gripping organs comprise a plate able to couple with the hub using fastening means preferably comprising a plurality of threaded screws;
the frames are hingedly triangularly shaped, preferably isosceles, with the base side orientated parallel to the rails and having a variable extension, such as to enable adjustment of the interaxis between the main shafts and the gripping organs;
the rolling means provided by a main shaft are equipped with at least a flange orientated perpendicular to the shaft and able to abut the lateral part of the respective rail, in order to enable lateral containment of the carriage with respect to the rails, while the rolling means provided by the remaining main shaft are not equipped with like flanges.

The characteristics of the invention will be illustrated in the following, in which some preferred but not exclusive embodiments will be described with reference to the accompanying figures of the drawings, in which:

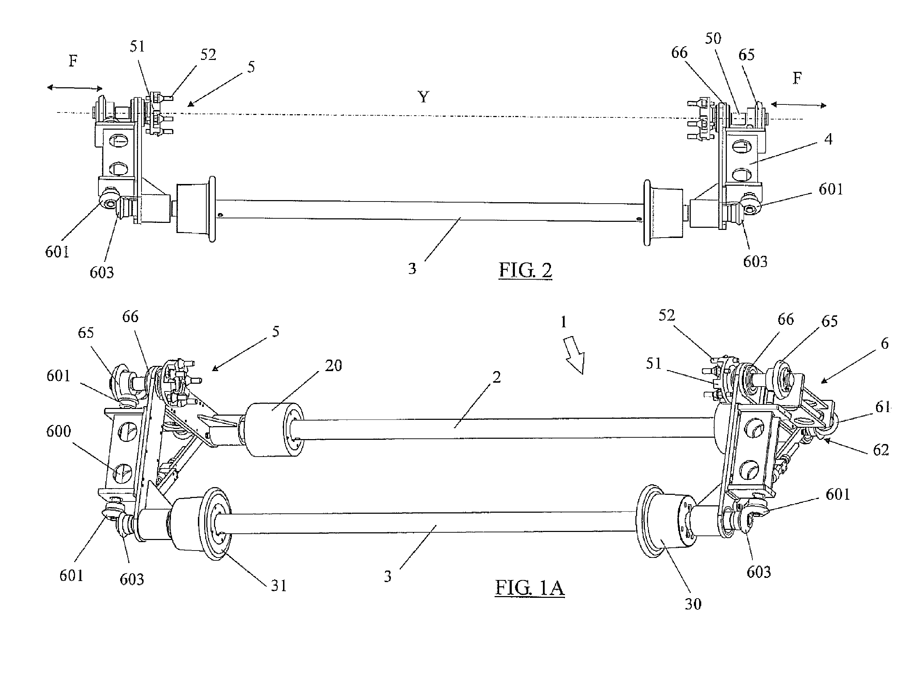

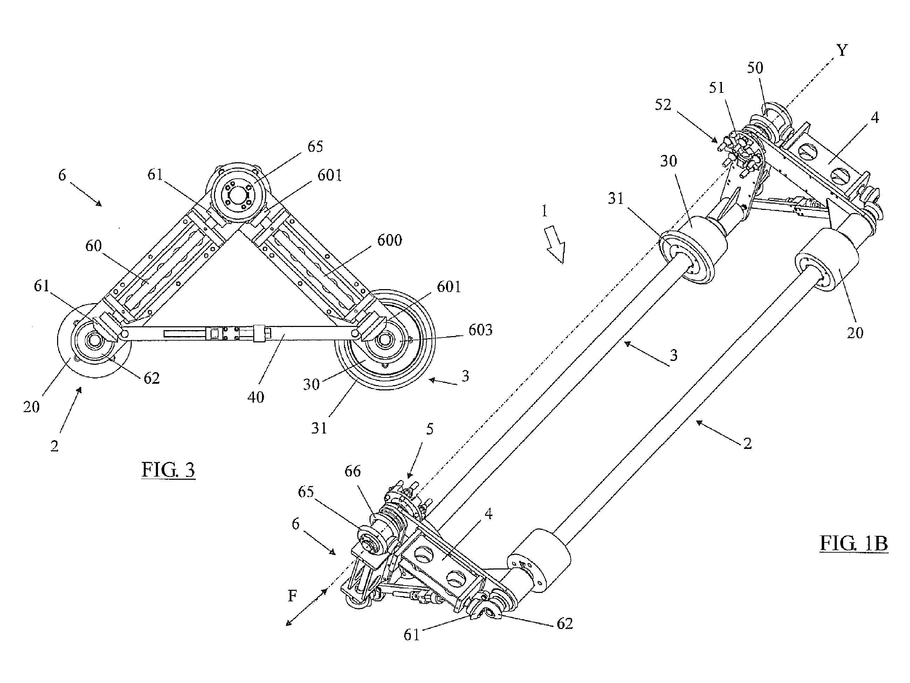

figures 1A, 1B schematically illustrate two perspective views of the carriage of the invention from different angles;
figures 2, 3 show a corresponding front and lateral view of the carriage illustrated in figures 1A, 1B;

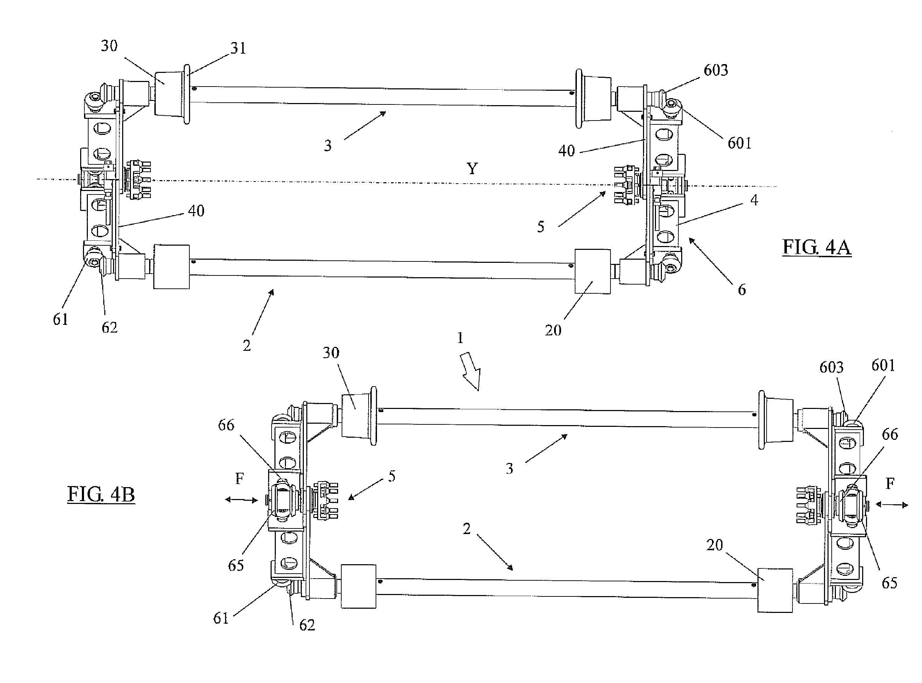

figures 4A, 4B illustrate two plan views, respectively from below and from above, of the carriage;
figures 5A, 5B illustrate two kinematic diagrams of the movement system of the carriage of the invention, respectively forward reverse motion.

With reference to the above figures of the drawings, reference numeral 1 denotes the carriage for supporting and moving a road vehicle on rails, which comprise a pair of main shafts 2, 3, orientated transversally to the rails, provided with rolling means 20, 30 destined to engage with the rails and rotatably supporting, in proximity of the ends thereof, a pair of frames 4 for bilateral support of an axle Y of the vehicle, preferably the drive axle; each frame 4 rotatably supports gripping organs 5 able to couple to the hub of the vehicle wheels at the said axle Y.

The carriage 1 of the invention further comprises transmission organs 6, associated to at least a frame 4 able to transmit the drive of the gripping organs 5 associated to the wheel hub to at least a main shaft 2.

The carriage 1 advantageously comprises transmission organs 6 associated to both the frames 4, for a bilateral transmission of the drive to the first main shaft 2, entirely to the advantage of the dynamic balancing.

To enable maximum adaptability of the transversal profile of the vehicle, the pair of frames 4 can be adjustably positioned with respect to the main shafts 2, 3.

Purely by way of example, with reference to the accompanying figures of the drawings, the transmission organs 6 comprise a first shaft 60, borne rotatably by each frame 4, provided at ends thereof with cogged wheels 61, preferably conical, destined to enmesh with corresponding cogged wheels (62, 65, 66) keyed to an end of the first main shaft 2 and to the gripping organs 5; the first main shaft 2 is powered in this way.

The transmission organs 6 further comprise a second shaft 600, borne rotatably by each frame 4, provided at ends thereof with cogged wheels 601, preferably conical, destined to enmesh with corresponding cogged wheels 603, 65, 66 keyed to an end of the second main shaft 3 and the gripping organs. The second main shaft 3 is powered in this way.

The transmission organs 6 further comprise switch means for enabling advancement of the carriage 1 in the two motion directions, forward and reverse, while maintaining the same rotation direction of the axle Y of the vehicle.

In a preferred embodiment, the switch means 65, 66 allow advancement of the carriage 1 in two directions of movement, forwards and backwards, while maintaining a same rotation direction of the axle Y of the vehicle.

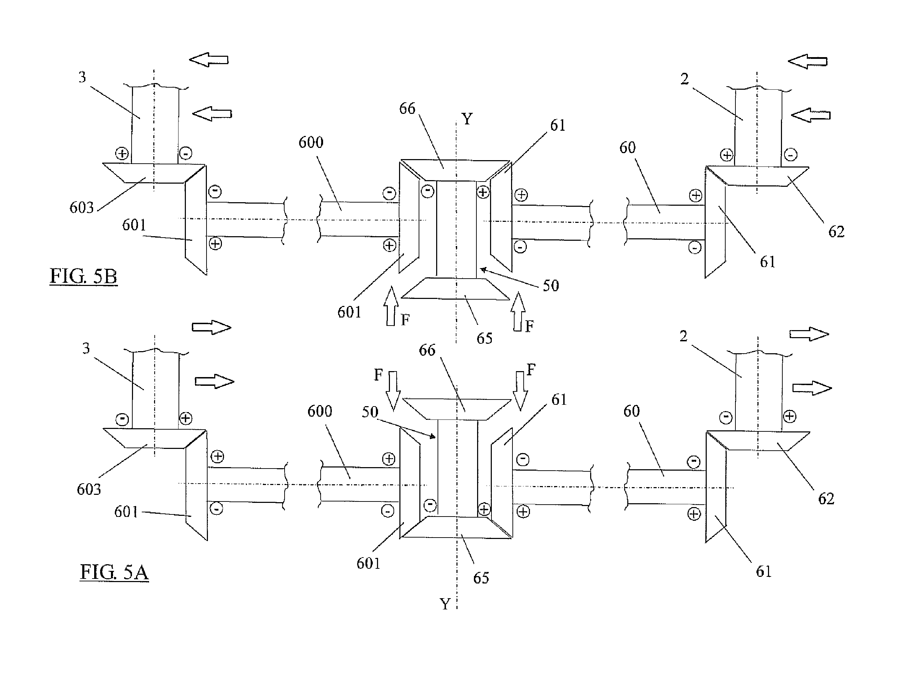

In a preferred embodiment, the switch means comprise a pair of cogged wheels 65, 66 borne by a sleeve 50 keyed slidably F to the gripping organs 5, in accordance with the axle Y of the hub; each cogged wheel 65 being able to engage, distinctly from another of the cogged wheels 66, with the cogged wheels 61, 601 of the shaft 60, 600 of the transmission organs 6 in order to enable an opposite rotation of the respective main shafts 2, 3, with a same rotation direction of the axle Y of the vehicle (figures 5A, 5B).

The cogged wheels 61, 601 face the sleeve 50 and are interposed between the pair of cogged wheels 65, 66 on opposite sides, and are contemporaneously enmeshed with each 65 cogged wheel, not contemporaneously to one another 66, in order to move both the main shafts 2, 3 and enable a sort of integral traction.

This kinematism is schematically illustrated, for reasons of greater clarity, in figures 5A, 5B where the couplings between the cogged wheels 61, 601 of the shafts 60, 600 and the cogged wheels 65, 66 and the switch means are illustrated in the two configurations which allow forward motion (figure 5A) and reverse motion (figure 5B) of the carriage 1.

Figures 5A and 5B schematically indicate the rotation versors of the single components using the symbols + and - according to whether the versors enter or exit from the plane of the diagram.

The switching system enables the carriage 1 to be moved alternatively forwards or in reverse simply by acting on the manual or automatic translation (F) of the sleeve 50 and the associated cogged wheels 65, 66.

In substance the frontwards drive of the carriage 1 is associated to a cogged wheel 65, and the reverse drive of the carriage 1 is associated to the other cogged wheel.

It is understood that mechanically it is entirely equivalent to provide a single cogged wheel 65 which alternatively engages with the cogged wheels 61, 601 of the shafts 60, 601 such as to drive, for example, the first main shaft 2 for forwards motion and the second main shaft 3 for reverse motion, while maintaining the rotation of the vehicle axle Y in a same direction.

In a preferred embodiment, the gripping organs 5 comprise a plate 51 able to couple with the hub by means of fastening means 52, preferably constituted by a plurality of threaded screws provided with heads and destined to engage in corresponding holes realised in the plate 51 of the hub.

The two frames 4 are advantageously shaped as a hinged triangle, preferably an isosceles triangle, with the base side 40 orientated parallel to the rails and having a variable extension, such as to enable regulation of the interaxis between the main shafts 2, 3 and the gripping organs 5.

In a preferred embodiment the rolling means 30 provided by a main shaft, for example the second 3, are provided with at least a flange 31 perpendicular to the main shaft and able to abut the lateral part of the relative rail, in order to enable lateral containment of the carriage 1 with respect to the rails, while the rolling means 20 provided by the remaining main shaft 2 are without like flanges.

This enables having no constraint connected to the minimum degree of curvature of the rails as the guide of the carriage 1 is guaranteed by the flanges 31 of the rolling means 30 of the second main shaft 3; the rolling means 20 of the first main shaft 2, being without flanges, do not perform any guide function.

By way of example, the rolling means 20, 30 are constituted by a pair of substantially cylindrical bodies, or rather slightly conical.

During normal functioning, the hubs of the drive axle Y of the vehicle are coupled with the respective plates 51 of the gripping organs 5, borne rotatably by the corresponding frames 4.

The rotation for a forwards motion of the vehicle (figure 5A) is transmitted by the cogged wheels 65 contemporaneously to the first 60 and second 600 shafts of the transmission means 6 by means of the conical couplings with the respective end cogged wheels 61, 601, and by the shafts 60, 600 to the respective first 2 and second 3 main shafts, by means of the coupling between the respective conical wheels 61-62, 601-603.

In this drive condition the remaining cogged wheels 66 are obviously decoupled from the shafts 60, 600 of the transmission organs 6; they enter into function only in the case of a switch to oppositely-directed drive, i.e. into reverse.

In the proposed transmission system, with regard to each frame 4, the carriage 1 drive is associated to a cogged wheel 65 in forwards motion, and the carriage 1 drive is associated to the other cogged wheel 66 in reverse motion.

Should it be desired to invert the advancement direction and pass from forwards motion to the reverse motion, preferably in static conditions of the carriage 1, it is simply sufficient to translate F the sleeve 50 and enable decoupling of the cogged wheels 65 actually engaged, in order to facilitate the coupling of the cogged wheels 66 with the end cogged wheels 61, 601 of the shafts 60, 600.

These operations are obtained by simple translation (manual or automatic) of the sleeve 50 supporting the switching cogged wheels 65, 66.

In this way the advancement direction (forwards/reverse and vice versa) is inverted, while the axle Y of the vehicle is maintained constant.

This enables the velocity of the carriage 1 to be managed in the two advancement directions, while always using the full potential of the vehicle engine and the change thereof.

It is understood that the same functions can be obtained with the presence of only the first shaft 60 of the transmission organs 6; in this case the first main shaft 2 would be the sole drive shaft.

From the above it is clear how the proposed carriage for support and movement of a road vehicle on rails is able to guarantee maximum stability of the vehicle during movement thereof, and is thus adaptable to a vast range of vehicles.

This adaptability is to be imputed to the simple and rapid substitutability of the plates of the gripping organ, which couple with the hubs of the relative vehicles, together with the regulation of the frames with respect to the main shafts.

To guarantee optimum stability of the vehicle in a case of movement, a contribution is made by the presence of the flanges provided on a single main shaft, such as not to have any constraint connected to the minimum degree of curvature of the rails.

The carriage further enables achieving maximum shock-absorbing standards and the best possible performance during the braking step, while allowing a particularly contained cost with respect to the known solutions.

Both the shock absorbing systems and the assisted braking systems of the vehicle (for example ABS) can be exploited, without incurring costs deriving from additional and/or supplementary systems, as in known solutions.

The invention has obviously been described, with reference to the accompanying figures of the drawings, purely by way of non-limiting example, and it is thus clear that all modifications or variants can be added thereto without its forsaking the ambit defined in the following claims.

## Claims

1. A carriage for support and movement of a road vehicle on rails, **characterised in that** it comprises: a pair of main shafts (2, 3), orientated transversally of the rails, provided with rolling means (20, 30) destined to engage with the rails and rotatingly supporting, in proximity of ends thereof, a pair of frames (4) for bilateral support of an axle (Y) of the vehicle, preferably a drive axle; each frame (4) rotatingly supporting gripping organs (5) able to couple to a hub of a wheel of the vehicle at the drive axle (Y) thereof; and transmission organs (6) associated to at least a frame (4) of the pair of frames (4), able to transmit to at least a first main shaft (2) a drive motion of the gripping organs (5) associated to the hub of the wheel.

2. The carriage of claim 1, **characterised in that** it comprises the pair of frames (4) positioned adjustably with respect to the main shafts (2, 3) in order to enable maximum adaptability to a transversal dimension of the vehicle.

3. The carriage of claim 1 or 2, **characterised in that** it comprises transmission organs (6) associated to both frames (4), for a bilateral transmission of drive to the first main shaft (2).

4. The carriage of one of claims from 1 to 3, **characterised in that** the transmission organs (6) comprise switch means (65, 66) able to allow advancement of the carriage (1) in two directions of movement, forwards and reverse, while maintaining a same rotation direction of the axle (Y) of the vehicle.

5. The carriage of one of claims from 1 to 4, **characterised in that** the transmission organs (6) comprise at least a first shaft (60), rotatably borne by the frame (4), provided at ends thereof with preferably conical cogged wheels (61) designed to enmesh with corresponding cogged wheels (62, 65, 66) keyed to an end of the first main shaft (2) and to the gripping organs (5).

6. The carriage of claim 5, **characterised in that** the transmission organs (6) further comprise a second shaft (600), rotatably borne by the frame (4), provided at ends thereof with preferably conical cogged wheels (601) designed to enmesh with corresponding cogged wheels (603, 65, 66) keyed to an end of the second main shaft (3) and to the gripping organs (5).

7. The carriage of claim 4 and 5, or 4 and 6, **characterised in that** the switch means comprise a pair of cogged wheels (65, 66) borne by a sleeve (50) keyed slidably (F) to the gripping organs (5), in accordance with the axle (Y) of the hub; each cogged wheel (65) being able to engage, distinctly from another of the cogged wheels (66), with the cogged wheels (61, 601) of the shaft (60, 600) of the transmission organs (6) in order to enable an opposite rotation of the respective first main shaft (2) and/or second main shaft (3), with a same rotation direction of the axle (Y) of the vehicle; and **in that** the cogged wheels (61, 601) face the sleeve (50) and are interposed between the pair of cogged wheels (65, 66).

8. The carriage of one of claims from 1 to 7, **characterised in that** the gripping organs (5) comprise a plate (51) able to couple with the hub via fastening means (52), preferably comprising a plurality of threaded screws.

9. The carriage of any one of claims from 1 to 8, **characterised in that** the frames (4) are shaped as an articulated triangle, preferably an isosceles triangle, with a base side (40) thereof orientated parallel to the rails and exhibiting a variable extension such as to enable adjustment of the interaxis between the main shafts (2, 3) and the gripping organs (5).

10. The carriage of any one of claims from 1 to 9, **characterised in that** the rolling means (30) provided by a main shaft (3) are provided with at least a flange (31) which is perpendicular to the shaft (3) and able to encounter a lateral part of the rail, in order to enable lateral containment of the carriage (1) with respect to the rails; and **in that** the rolling means (20) provided by the remaining main shaft (2) do not exhibit the at least a flange.
